# FASCICULE DE BREVET EUROPEEN

(11) **EP 2 575 182 B1**
(45) Date de publication et mention de la délivrance du brevet: **22.04.2015**
(21) Numéro de dépôt: 11306232.7
(22) Date de dépôt: 27.09.2011
(51) Int. Cl.: H01L 31/042, H01L 31/048, F24J 2/52, E04D 1/34

(54) **Dispositif de fixation d'au moins un module photovoltaïque sur une structure porteuse, panneau photovoltaïque et ensemble comprenant au moins deux panneaux photovoltaïques équipés chacun d'un tel dispositif**
Befestigungsvorrichtung für mindestens ein Photovoltaikmodul auf einer tragenden Struktur, Solarplatte und Baugruppe, die mindestens zwei Solarplatten umfasst, die jeweils mit einer solchen Vorrichtung ausgestattet sind
Device for attaching at least one photovoltaic module to a supporting structure, photovoltaic panel and unit including at least two photovoltaic panels each provided with such a device

(43) Date de publication de la demande: 03.04.2013
(73) Titulaire: Captelia, 69400 Arnas (FR)
(72) Inventeur: Vanhamme, Pascal, 01600 MISERIEUX (FR); Carvat, Yohann, 69550 MEAUX LA MONTAGNE (FR); Ait Hammou, Omar, 69480 ANSE (FR)
(74) Mandataire: Myon, Gérard Jean-Pierre

(56) Documents cités:
- WO-A2-2010/128375
- US-A1- 2011 000 519
- Anonymous: "Installation guide for Imerys large format PVt 60 photovoltaic panel", Imerys Roof Tiles , 2 février 2011 (2011-02-02), pages 1-28, XP002671769, Extrait de l'Internet: URL:http://www.ecobuild.co.uk/var/uploads/ exhibitor/3755/ha0kturjtj.pdf [extrait le 2012-03-19]

## Description

L'invention a trait à un dispositif qui permet de fixer un ou plusieurs modules photovoltaïques sur une structure porteuse telle qu'un toit, tout particulièrement dans le cas où plusieurs modules photovoltaïques doivent être installés les uns au dessus des autres le long d'une ligne de pente du toit ou contre une paroi d'un bâtiment.

Au sens de la présente invention, un module photovoltaïque est un ensemble de cellules solaires interconnectées entre elles et protégées contre l'environnement. Un tel module photovoltaïque comprend généralement une plaque de verre, dite plaque avant, en dessous de laquelle sont disposées les cellules. Il peut ou non être équipé d'un cadre périphérique.

Dans le domaine de la production d'énergie électrique, il est connu de monter un tel module sur un dispositif de fixation permettant son immobilisation par rapport à une structure porteuse. Un tel dispositif de fixation peut comprendre une plaque de base destinée à être disposée sous le module et qui constitue avec celui-ci un panneau photovoltaïque, au sens de la présente invention.

Lorsque deux panneaux photovoltaïques doivent être disposés l'un au dessus de l'autre selon la ligne de pente d'un toit, il est connu, par exemple de la brochure « Installation guide for Imerys large format PVt 60 photovoltaic panel » (XP 002671769), d'utiliser des pattes d'accrochage fixes entre les plaques des dispositifs de fixation de ces deux panneaux. Ces pattes doivent être approvisionnées en nombre suffisant sur chaque chantier et sont rapportées sur chaque plaque de base, avec un risque de perte. En outre, le coût de ces pattes n'est pas négligeable.

WO2010128375 divulgue d'autre part des joints profilés destinés à interagir non pas avec une plaque de base mais directement avec une structure de support en définissant des feuillures de réception des bords inférieur et supérieur de panneaux photovoltaïques.

C'est à ces inconvénients qu'entend plus particulièrement remédier l'invention en proposant un nouveau dispositif de fixation qui permet une juxtaposition aisée, économique et réglable de deux panneaux photovoltaïques selon la ligne de pente d'un toit ou verticalement le long d'une paroi.

A cet effet, l'invention concerne un dispositif de fixation d'au moins un module photovoltaïque sur une structure porteuse, ce dispositif comprenant une plaque de base équipée de crochets aptes à retenir en position un bord longitudinal inférieur d'un module photovoltaïque en place sur cette plaque de base. Conformément à l'invention, le dispositif comprend en outre au moins un organe de blocage qui comprend
- une première patte apte à venir en recouvrement d'une face avant du module, au voisinage de son bord longitudinal supérieur
- un relief d'écartement du bord longitudinal supérieur du module par rapport à la plaque de base et la face arrière du module
- un deuxième patte qui, lorsqu'un autre dispositif de fixation analogue est disposé au voisinage du dispositif de fixation au dessus de celui-ci selon une direction au moins partiellement verticale, s'étend en regard de la face avant de la plaque de base de l'autre dispositif de fixation,
alors que les première et deuxième pattes et le relief d'écartement appartiennent à une même pièce monobloc qui constitue l'organe de blocage.

Grâce à l'invention, l'organe de blocage assure une triple fonction. Par sa première patte, il permet de maintenir en place le module sur la plaque de base. Par son relief, il permet de définir l'écartement entre la face arrière du module et la plaque de base, ce qui est important sur le plan thermique et sur le plan mécanique. Par sa deuxième patte, il permet de tenir la partie inférieure de la plaque de base d'un autre dispositif de fixation disposée au dessus de celui auquel appartient l'organe de blocage. L'utilisation d'un seul organe de blocage pour réaliser cette triple fonction est avantageux non seulement en termes de prix de revient du dispositif de fixation mais également en termes de rapidité et de facilité de mise en oeuvre lors de l'assemblage d'un panneau photovoltaïque et lors de la pose de différents panneaux photovoltaïques sur un site d'installation.

Selon des aspects avantageux mais non obligatoires de l'invention, un tel dispositif de fixation peut incorporer une ou plusieurs des caractéristiques suivantes, prises dans toute combinaison techniquement admissible :
- La pièce monobloc est avantageusement réalisée par découpage d'un profilé qui peut être en métal, en alliage de métal ou en matériau synthétique.
- Lorsqu'elle est en regard de la face avant de la plaque de base d'un autre dispositif de fonction disposé au-dessus, la deuxième patte s'étend entre cette face avant et une face arrière d'un module photovoltaïque monté sur cet autre dispositif de fixation.
- Le dispositif de fixation comprend plusieurs organes de blocage repartis sur la longueur de la plaque de base, avec un pas égal au pas d'écartement, selon cette longueur, d'orifices ménagés dans un bord inférieur de la plaque de base, pour le passage des deuxièmes pattes des organes de blocage d'un autre dispositif analogue disposé en-dessous.
- Le dispositif comprend une tige de verrouillage apte à être engagée à la fois dans plusieurs logements ménagés au voisinage des crochets de retenue, selon une direction parallèle à la longueur de la tige.
- Le dispositif de fixation comprend un bandeau de finition apte à recouvrir un interstice entre le bord supérieur d'un module photovoltaïque monté sur ce dispositif de fixation et le bord inférieur de la plaque de base d'un autre dispositif de fixation disposé au-dessus de ce dispositif de fixation.
- Chaque première patte est pourvue, sur son côté destiné à être tourné vers la face avant du module photovoltaïque, d'une encoche de réception, entre cette première patte et cette face avant, d'un bord du bandeau de finition.
- Lorsque la tige est en place dans les logements, elle chemine sous une aile supérieure du bandeau de finition.

L'invention concerne également un panneau photovoltaïque qui comprend un module photovoltaïque et un dispositif de fixation de ce module sur une structure porteuse, ce dispositif de fixation étant tel que mentionné ci-dessus, alors que le module forme, avec un voile principal de la plaque de base du dispositif de fixation, un angle compris entre 1° et 3°.

Le caractère incliné du module par rapport au voile principal de la plaque de base facilite l'intégration du panneau photovoltaïque dans une toiture, sans dépasser sensiblement des produits de couverture adjacents.

L'invention concerne également un ensemble qui comprend au moins deux panneaux photovoltaïques comprenant chacun un module photovoltaïque et un dispositif de fixation tel que mentionné ci-dessus, avec un premier panneau photovoltaïque disposé au dessous du deuxième panneau photovoltaïque, selon la ligne de pente d'un toit de bâtiment ou verticalement le long d'une paroi, alors que chaque première patte de chaque panneau photovoltaïque est en recouvrement de la face avant de son module et que chaque deuxième patte du premier panneau s'étend en regard de la face avant de la plaque de base du deuxième panneau, au voisinage des crochets de retenue de ce deuxième panneau.

L'invention sera mieux comprise et d'autres avantages de celle-ci apparaîtront plus clairement à la lumière de la description qui va suivre de deux modes de réalisation d'un dispositif de fixation et d'un ensemble de panneaux photovoltaïques conforme à son principe, donnée uniquement à titre d'exemple et faite en référence aux dessins annexés dans lesquels :
- la figure 1 est une vue en perspective d'un ensemble de deux panneaux photovoltaïques comprenant chacun un dispositif de fixation conforme à un premier mode de réalisation de l'invention,
- la figure 2 est une vue à plus grande échelle du détail Il à la figure 1, le module photovoltaïque étant représenté transparent,
- la figure 3 est une coupe selon la ligne III-III à la figure 2,
- la figure 4 est une vue à plus grande échelle du détail IV à la figure 3,
- la figure 5 est une vue à plus grande échelle du détail V à la figure 3,
- la figure 6 est une vue de face d'un ensemble de deux panneaux photovoltaïques comprenant chacun un dispositif de fixation conforme à un deuxième mode de réalisation de l'invention, cet ensemble étant dans une première configuration d'utilisation,
- la figure 7 est une coupe à plus grande échelle selon la ligne VII-VII à la figure 6,
- la figure 8 est une vue à plus grande échelle du détail VIII-VIII à la figure 7,
- la figure 9 est une vue à plus grande échelle du détail IX à la figure 7,
- la figure 10 est une vue de face de l'ensemble des figures 6 à 9 dans une deuxième configuration d'utilisation,
- la figure 11 est une coupe à plus grande échelle selon la ligne XI-XI à la figure 10,
- la figure 12 est une vue à plus grande échelle du détail XII à la figure 11,
- la figure 13 est une vue à plus grande échelle du détail XIII à la figure 11,
- la figure 14 est une vue en perspective correspondant au détail XIV à la figure 10, le module n'étant pas représenté pour permettre la visualisation de la plaque de base,
- la figure 15 est une vue en perspective correspondant au détail XV à la figure 10,
- la figure 16 est une vue en perspective correspondant au détail XVI à la figure 10, le module n'étant pas représenté, comme à la figure 14.

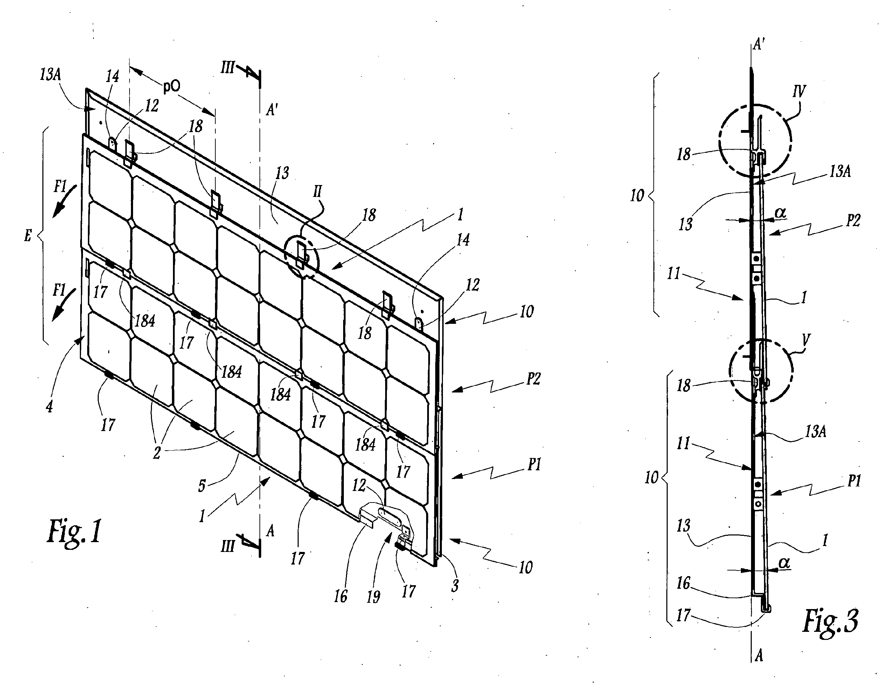

L'ensemble E représenté aux figures 1 à 5 comprend deux panneaux photovoltaïques P1 et P2 superposés selon une direction qui correspond à la ligne de pente d'une toiture dans laquelle sont intégrés les panneaux P1 et P2 et qui est représentée par l'axe A-A' sur les figures 1 et 3. Le panneau P1 est le panneau inférieur, alors que le panneau P2 est le panneau supérieur.

Chaque panneau P1 ou P2 est formé d'un module photovoltaïque 1 et d'un dispositif de fixation 10.

Un module photovoltaïque 1 comprend seize cellules photovoltaïques 2 disposées entre une plaque de fond 3 et une plaque avant translucide 4, ainsi qu'une boîte de jonction non représentée fixée sur la plaque de fond 3. Ces éléments constituent ensemble un module 1.

Chaque module 1 est immobilisé sur le toit d'un bâtiment en étant intégré à un panneau auquel appartient un dispositif de fixation 10 qui comprend une plaque de base 11 formée par pliage et découpage d'un flanc de tôle. Cette plaque de base est équipée de plusieurs bossages dont deux sont visibles à la figure 1 avec la référence 12 et qui forment chacun une surépaisseur par rapport à un voile de fond plan, ou voile principal, 13 de la plaque 11 qui est visible à la figure 1. Dans chaque bossage 12 sont ménagés deux orifices 14 de passage de vis non représentées permettant la fixation de la plaque de base 11 sur la toiture d'un bâtiment non représenté, notamment des liteaux.

Dans ce qui suit, on considère l'ensemble E en configuration installée sur le toit d'un bâtiment et les parties de l'ensemble E tournées vers le soleil sont dites parties avant, alors que les parties tournées à l'opposé sont dites parties arrière. Ainsi, la face 13A du voile de fond 13 visible à la figure 1 est sa face avant. Dans cette configuration, on considère que la direction A-A' est au moins en partie verticale, de sorte qu'une partie orientée vers le haut de la figure 1 est dite supérieure, alors qu'une partie tournée vers le bas de cette figure est dite inférieure.

Le bord inférieur 16 de la plaque de base 11 est équipé de quatre crochets 17 repartis sur la longueur de ce bord et qui reçoivent ensemble le bord inférieur 5 d'un module 1.

Pour éviter qu'un module 1 reposant sur une plaque de base 10, en appui sur ses crochets 10, ne bascule dans le sens des flèches F1 à la figure 1, des organes de blocage 18 sont fixés sur le voile de fond 13 de la plaque de base 11, au moyen de rivets non représentés.

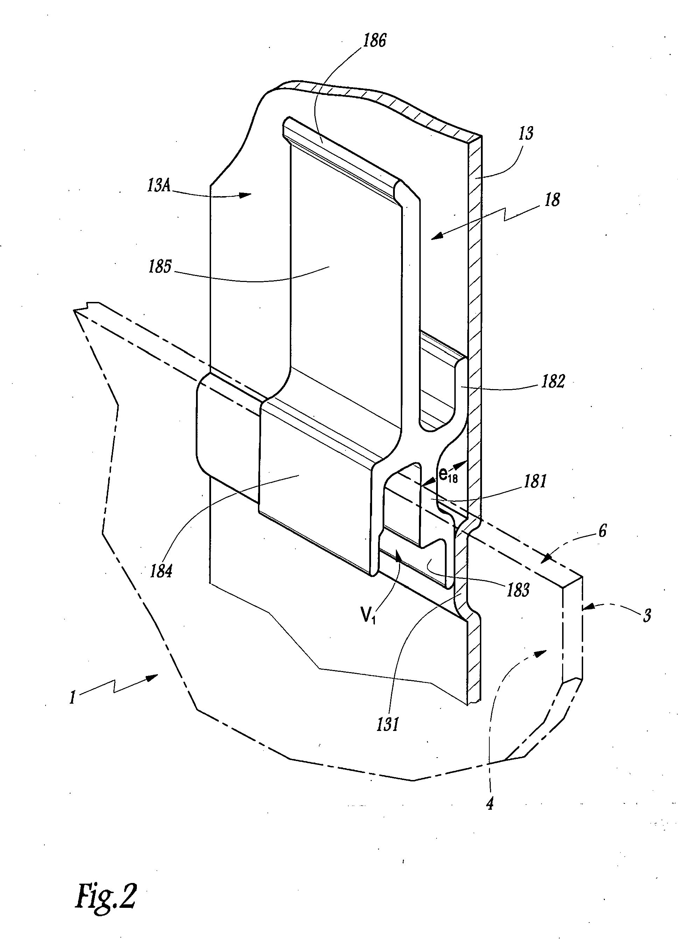

Comme cela ressort plus particulièrement de la figure 2, chaque organe de blocage 18 peut être réalisé par un tronçon de profilé métallique comprenant plusieurs branches. En variante, un tel organe de blocage peut être réalisé en alliage métallique, par exemple en AU6060, ou en matériau synthétique.

Chaque organe de blocage 18 comprend un socle 181 à partir duquel s'étendent deux semelles 182 et 183 destinées à venir en appui plan contre la face avant 13A du voile de fond. Ces semelles sont percées d'orifices non visibles à la figure 2 de passage de vis ou de rivets de fixation sur la plaque de base 11. La semelle 183 est en appui contre un bossage 131 ménagé sur le voile de fond 13 et du type des bossages 12.

A partir du socle 181 s'étend une première patte 184 qui définit, avec le socle 181, un volume V₁ de réception d'un bord supérieur 6 d'un module photovoltaïque 1 qui est représenté transparent et en traits mixtes à la figure 2 pour la clarté du dessin. Plus précisément, la patte 184 est prévue pour venir en recouvrement local de la plaque avant 4 du module 1, ce qui lui permet de s'opposer efficacement à un basculement de ce module dans le sens des flèches F1 à la figure 1.

Lorsque le bord supérieur 6 du module 1 est reçu dans le volume V₁, le socle 181 permet de maintenir le module 1 à distance de la plaque de base 1. En effet, la distance minimale entre la plaque de fond 3 du module 1 et le voile de fond 13 de la plaque de base 11, en dehors du bossage 131, est égale à l'épaisseur e₁₈ du socle 18 mesurée entre la surface de sa semelle 182 tournée vers le voile de fond 13 et sa surface définissant le volume V₁.

Ainsi, les quatre organes de blocage visibles en partie supérieure de la figure 1 permettent d'immobiliser le module 1 du panneau P2 par rapport à sa plaque de base 11 et de le maintenir à distance du voile de fond 13 de cette plaque de base. Il en va de même pour le panneau P1.

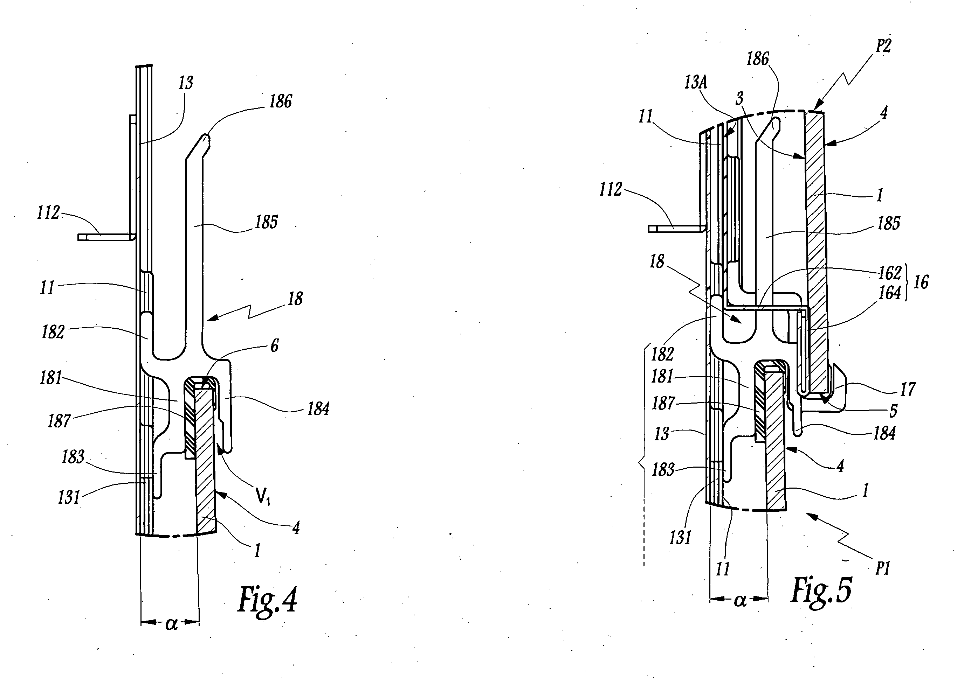

Afin de limiter les contraintes mécaniques sur le module 6, une garniture élastique 187 est intercalée entre son bord 6 et l'organe de blocage 18. Ceci n'est pas représenté à la figure 2, pour la clarté du dessin, mais la garniture 187 est visible aux figures 4 et 5. Cette garniture peut être réalisée en élastomère naturel ou synthétique ou dans un matériau souple sur la plage de températures d'utilisation de l'ensemble E.

Chaque organe de blocage 18 comprend également une deuxième patte 185 qui s'étend au-dessus de son volume V₁ dans la configuration des figures 1 à 5.

Par ailleurs, le bord inférieur 16 de chaque plaque de base 11 est percé de quatre orifices, dont un seul est visible à la figure 1, par arrachement et avec la référence 19, ces orifices étant alignés, parallèlement à la direction A-A', avec les organes de blocage 18 lorsque ceux-ci sont montés sur la plaque de base 11.

Ainsi, lorsque le panneau P1 a été constitué en immobilisant son module photovoltaïque 1 sur son dispositif de fixation 10, grâce à quatre organes de blocage 18 dont seules les pattes 184 sont visibles à la figure 1, il est possible d'engager les deuxièmes pattes 185 des organes de blocage 18 de ce premier panneau P1 dans les orifices 19 de la plaque de base 11 du deuxième panneau P2 situé au-dessus selon la direction A-A'.

C'est ce qui a été réalisé dans la configuration des figures 1 à 5 où, comme représenté à la figure 5, la deuxième patte 185 d'un organe de blocage 18 du panneau P1 est engagée entre le bossage du voile de fond 13 de la plaque de base 11 du panneau photovoltaïque supérieur P2 et le module photovoltaïque 1 de ce panneau.

Comme visible sur cette figure, un bec terminal 186 de la deuxième patte 185 facilite l'insertion de la patte 185 dans les orifices 19 de la plaque de base 11 du panneau P2.

Comme cela ressort plus particulièrement des figures 3, 4 et 5, la géométrie des éléments 16, 17 et 18 est telle que, une fois monté sur la plaque de base 11 correspondante, chaque module photovoltaïque 1 n'est pas parallèle au voile de fond ou voile principal 13 de cette plaque. Plus précisément, la face arrière du module, formée par la plaque de fond 3, forme avec le voile 13 de la plaque de base 11 un angle a compris entre 1 ° et 3°, de préférence à 1.5° pour les produits de couverture type « Ardoise ». Cette valeur est la même pour le panneau photovoltaïque inférieur P1 et pour le panneau photovoltaïque supérieur P2.

Grâce à cet aspect de l'invention, il est possible d'engager le bord supérieur 5 du module 1 du panneau P1 entre le bord inférieur 6 du module 1 du panneau P2, sans avoir recours à des joints ou languettes d'étanchéité amovibles et tout en conservant à l'ensemble formé des panneaux P1 et P2 une bonne compacité selon une direction perpendiculaire au voile de fond 13 des plaques de bases 11 des différents dispositifs de fixation 10 utilisés. En d'autres termes, le fait que les modules 1 sont inclinés d'un angle α non nul par rapport aux voiles principaux 13 des plaques de base 11 des panneaux P1 et P2 évite que ces panneaux dépassent sensiblement des produits de couverture environnants, ce qui est avantageux en termes esthétiques et en matière de règles d'habilitation.

L'orientation des modules 1 par rapport aux plaques de base 11 est telle que la distance entre chaque panneau 1 et la plaque de base 11 adjacente est plus faible au voisinage du bord longitudinal supérieur de ce panneau qu'au voisinage de son bord longitudinal inférieur.

Cet aspect de l'invention n'est pas obligatoire et, par exemple dans le cas de produits de couverture de type « tuile », le module peut être parallèle au voile 13. En d'autres termes, l'angle α vaut alors O°.

Comme cela ressort plus particulièrement de la figure 5, le bord inférieur 16 de chaque plaque de base comprend une première bande 162 perpendiculaire au voile de fond 13 et une deuxième bande, opposée au voile de fond 13 par rapport à la première bande rabattue sur elle-même. Ceci confère une bonne rigidité à la plaque de base 11, au voisinage de son bord 16. Les orifices 19 et équivalents sont ménagés dans les bandes 162 et 164 et débordent sur le voile de fond 13.

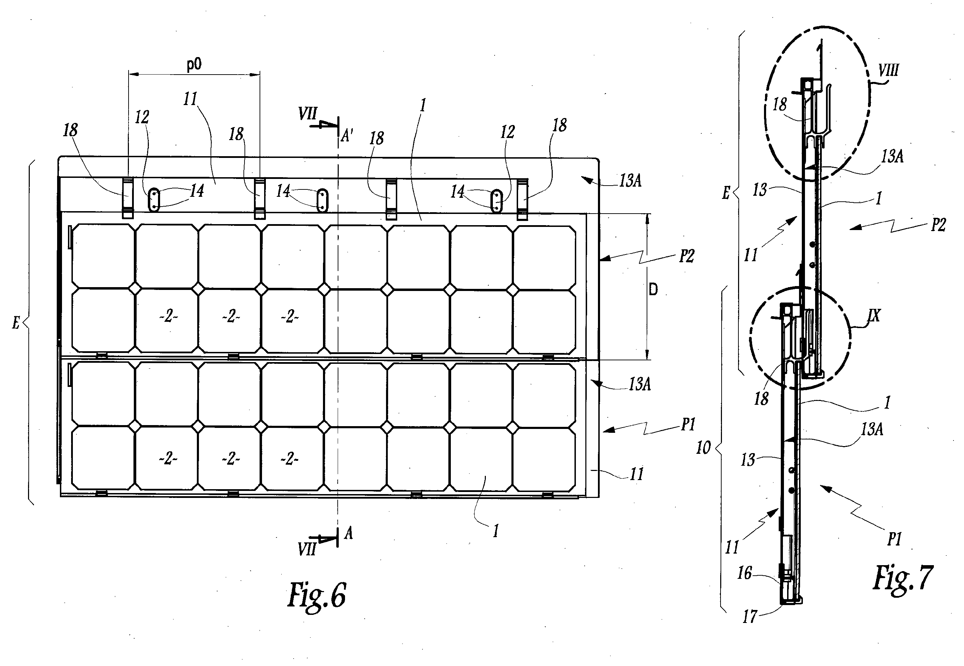

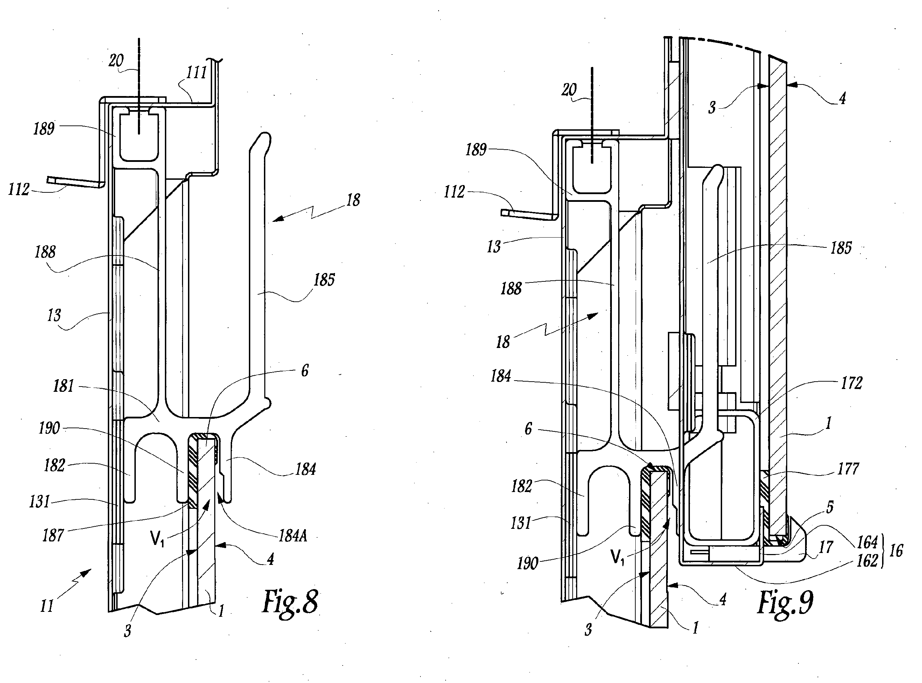

Dans le deuxième mode de réalisation de l'invention représenté aux figures 6 à 13, les éléments analogues à ceux du premier mode de réalisation portent les mêmes références. Dans ce qui suit, on ne décrit que ce qui distingue ce mode de réalisation du précédent.

Un organe de blocage 18 de ce deuxième mode de réalisation a une forme différente de celle du premier mode de réalisation dans la mesure où son socle 181 comprend une lamelle 188 qui se termine par un crochet 189 permettant de fixer de l'organe de blocage 18 sur la plaque de base 11 au niveau d'un rabat 111 perpendiculaire au voile de fond 13, par une vis ou un rivet 20 représenté par un trait d'axe, qui traverse un perçage du rabat 111 et est inséré dans le crochet 189. Le socle 181 comprend également une nervure 190 qui définit avec la première patte 184 un volume V₁ de réception du bord supérieur 6 d'un module photovoltaïque 1, avec interposition d'une garniture élastique 187.

La deuxième patte 185 de cet organe de blocage s'étend vers le haut à partir du socle 181, en regard de la face avant de la plaque de base 11 d'un panneau photovoltaïque identique lorsqu'un tel panneau est disposé au dessus du dispositif de fixation 10 auquel appartient l'organe de blocage 18. On remarque dans ce mode de réalisation que les orifices, analogues aux orifices 19 du premier mode de réalisation et ménagés dans le bas de la plaque de base 11 pour le passage de la deuxième patte 185 des organes de fixation 18, s'étendent également en partie sur le bas du voile de fond 13.

Une garniture 177 en matériau élastique, par exemple en élastomère, est prévue dans chaque crochet 17 pour éviter d'endommager le bord inférieur 5 du module photovoltaïque 1 supporté par ces crochets ou ses faces 3 et 4 à proximité de ce bord.

On remarque que le dièdre formé par le bas de la plaque de base 11 et une bande horizontale 162 du bord 16 est vide, alors qu'un élément tubulaire 172 solidaire de chaque crochet 17 définit l'écartement entre la plaque de base 11 et une bande rabattue 164 du bord inférieur 16.

On définit le pureau d'une installation comme la distance D, mesurée parallèlement à l'axe A-A', entre deux mêmes points de deux modules photovoltaïques 1 fixés sur la structure d'un bâtiment, au sein de deux panneaux photovoltaïques superposés. Dans l'installation des figures 6 à 9 ce pureau est, par exemple, égal à 340 mm.

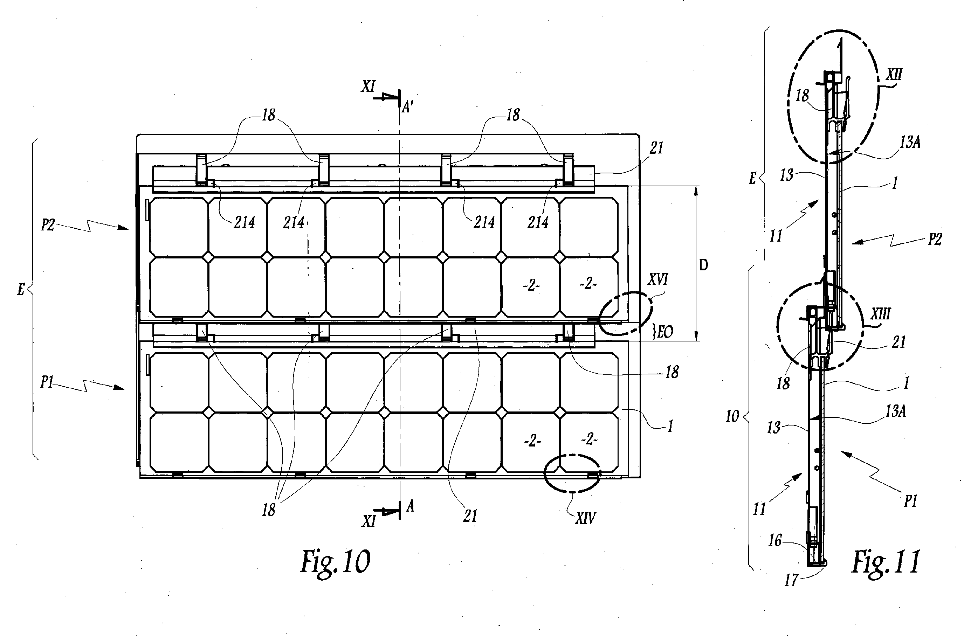

Dans la configuration des figures 10 à 13, et en tenant compte de l'environnement de l'ensemble E, notamment du type des produits de couverture utilisés au voisinage, le pureau D est choisi égal à 410 mm.

Dans ce cas, un bandeau d'habillage 21 est utilisé pour recouvrir, au moins dans la partie centrale des plaques de base 11, un espace E0 qui s'étend entre le bord supérieur 6 du module 1 du panneau P1 et le bord inférieur 5 du panneau 1 du module P2.

Ce bandeau 21 est obtenu par pliage et découpage d'un flanc de tôle et il est équipé d'encoches 213 de passage des organes de blocage 18.

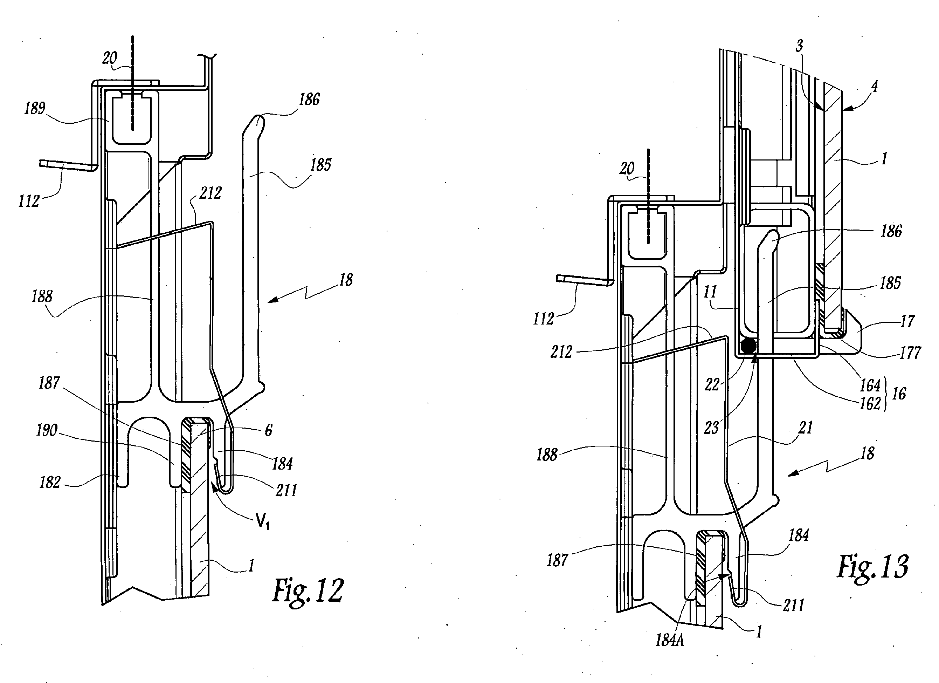

Comme cela ressort plus particulièrement de la figure 13, le bandeau 21 est pourvu d'un bord inférieur rabattu 211 qui vient s'accrocher sur les premières pattes 184 des organes de blocage 18. Ceci est possible grâce à une encoche 184A ménagée sur le côté de chaque première patte 184 qui définit le volume V₁, de telle sorte que le bord rabattu 211 du bandeau 21 peut être engagé dans le volume V₁ sans risquer de rayer ou d'endommager d'une autre façon la plaque avant 4 du module 1 quand le bord 6 est également en place dans ce volume.

Dans cette configuration représentée en détail à la figure 13, le bord inférieur 16 de la plaque de base du dispositif de fixation 10 appartenant au panneau photovoltaïque supérieur P2 est plus proche du bec d'extrémité 186 de la deuxième patte 185 que dans la configuration des figures 6 à 9. Plus précisément, l'essentiel de la deuxième patte 185 d'un organe de blocage est aligné avec la partie d'un orifice 19 qui est ménagée dans le voile de fond 13 de la plaque de base 11. Pour éviter un désengagement intempestif de la plaque de base 11 du dispositif de fixation 10 appartenant au panneau photovoltaïque P2 par rapport aux organes de blocage 18 appartenant au dispositif de fixation 10 du panneau P1, une tige 22 est engagée dans le coin formé par le dièdre défini entre la plaque de base 11 et le bord 16 de la plaque de base du dispositif 10 supérieur qui appartient au panneau P2. En effet, le volume laissé libre entre les crochets 17 et la partie inférieure de la plaque de base 11 définit, au niveau de chaque crochet 17 le long du bord 16 et dans le dièdre précité, un logement 23 de réception de cette tige 22. Ce logement est obturé vers le haut, par l'élément tubulaire 172 solidaire de chaque crochet 17.

La tige 22 est engagée, suivant sa longueur, dans les différents logements 23 qui sont alignés le long du bord 16, chacun étant ménagé au voisinage d'un crochet 17.

Une fois en place dans les différents logements 23, la tige 22 peut donc recevoir en appui la deuxième branche 185 de chacun des organes de blocage 18, dans les zones de ce voile correspondant aux orifices 19, comme le ferait la partie inférieure du voile 13 en dehors de ces orifices.

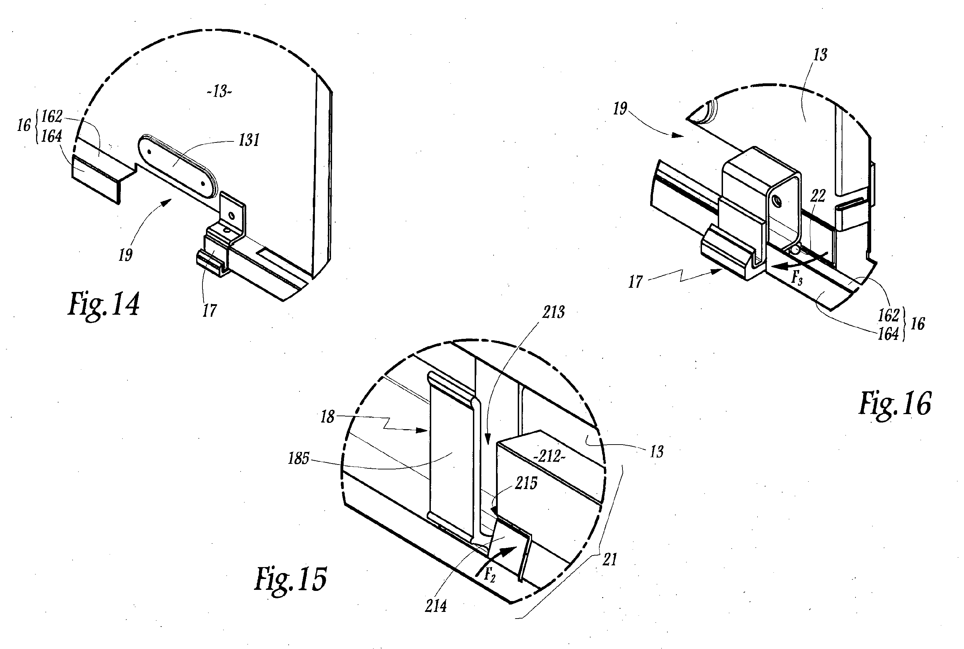

Deux languettes, dont une est visible à la figure 16 avec la référence 114, sont ménagées dans le voile de fond 13 respectivement entre chaque crochet 17 le plus proche d'un petit bord de la plaque de base 11 et ce bord. Lorsque la tige 22 est engagée dans les différents logements 23, ces pattes sont rabattues perpendiculairement au voile de fond 13, dans le sens de la flèche F₃ à la figure 16, de façon à immobiliser la tige 22 en translation parallèlement à son axe longitudinal, par rapport à la plaque de base 11.

Sur les figures, la tige 22 est représentée à section circulaire. Elle peut avoir toute section adaptée à la géométrie du logement 23 défini entre chaque crochet 17 et la plaque 11, comme mentionné ci-dessus. La tige 22 peut, en particulier, avoir une section rectangulaire complémentaire de la section du logement 23.

Comme cela ressort plus particulièrement des figures 10 et 13, quatre languettes 214 sont ménagées, chacune à proximité d'une encoche 213, ceci au moyen d'une découpe 215 en forme de L. Ainsi, lorsque les différents organes de blocage 18 sont reçus dans les encoches 213 du bandeau d'habillage 21, il est possible de rabattre chaque languette 214 en direction du voile de fond 13 de la plaque de base 11 sur laquelle sont fixés les organes de blocage 18, en exerçant un effort représenté par la flèche F₂ à la figure 15. Le fait de rabattre les différentes languettes 214, dont certaines sont situées sur la gauche des organes 18, alors que d'autres sont situées sur la droite de ces organes, permet d'immobiliser le bandeau 21 à la fois en translation parallèlement aux grands bords de la plaque de base 11 et en translation selon une direction verticale dirigée vers le bas, puisque les languettes 214 reposent alors sur le bord supérieur 6 du module 1 appartenant au panneau P1.

Dans les deux modes de réalisation considérés, quatre organes de blocage 18 sont utilisés et sont repartis, sur la longueur de la plaque de base 11 mesurée perpendiculairement à l'axe A-A' parallèlement au voile de fond 13, avec un pas p0 qui est égal aux pas des orifices 19 et équivalents ménagés au niveau du bord inférieur 16 de cette plaque. Ainsi, lorsqu'un ensemble E de plus de deux panneaux doit être réalisé, avec certains panneaux disposés côte-à-côte, il est possible d'installer un panneau supérieur en chevauchement sur deux panneaux inférieurs, à mi-longueur ou à un quart de longueur.

Les organes de blocage 18 des modes de réalisation envisagés ci-dessus sont monobloc. En variante, ils peuvent être constitués par une languette métallique formant les première et deuxième pattes mentionnées ci-dessus et qui est fixée dans une zone médiane à un support, tel qu'un tube métallique à section carrée qui constitue un socle et qui est lui-même immobilisé par vissage ou rivetage sur le voile de fond 13 de la plaque de base 11.

Les caractéristiques des modes de réalisation mentionnées ci-dessus peuvent être combinées entre elles.

## Revendications

1. Dispositif (10) de fixation d'au moins un module photovoltaïque (1) sur une structure porteuse, ce dispositif comprenant une plaque de base (11) équipée de crochets (17) aptes à retenir en position un bord longitudinal inférieur (5) d'un module photovoltaïque (1) en place sur cette plaque de base, ce dispositif de fixation comprenant en outre au moins un organe de blocage (18) qui comporte une première patte (184) apte à venir en recouvrement d'une face avant (4) du module (1), au voisinage de son bord longitudinal supérieur (6), **caractérisé en ce que** l'organe de blocage comporte, en outre,
- un relief (181) d'écartement du bord longitudinal supérieur (6) du module par rapport à la plaque de base (11), et
- une deuxième patte (185) qui, lorsqu'un autre dispositif de fixation analogue (10) est disposé au voisinage du dispositif de fixation au dessus de celui-ci, s'étend en regard de la face avant (13A) de la plaque de base (11) de l'autre dispositif de fixation,
et **en ce que** la première patte (184), la deuxième patte (185) et le relief d'écartement (181) appartiennent à une même pièce monobloc (18) qui constitue l'organe de blocage.

2. Dispositif selon la revendication 1, **caractérisé en ce que** la pièce monobloc (18) est réalisée par découpage d'un profilé en métal, en alliage ou en matériau synthétique.

3. Dispositif selon l'une des revendications précédentes, **caractérisé en ce que** lorsqu'elle est en regard de la face avant (13A) de la plaque de base (11) d'un autre dispositif de fixation (10) disposé au-dessus, la deuxième patte (185) s'étend entre cette face avant et une face arrière (3) d'un module photovoltaïque (1) monté sur cet autre dispositif de fixation.

4. Dispositif selon l'une des revendications précédentes, **caractérisé en ce qu'**il comprend plusieurs organes de blocage (18) repartis sur la longueur de la plaque de base (11), avec un pas (p0) égal au pas d'écartement, selon cette longueur, d'orifices (19) ménagés dans un bord inférieur (16) de la plaque de base, pour le passage des deuxièmes pattes (185) des organes de blocage (18) d'un autre dispositif analogue (10) disposé en-dessous du dispositif de fixation.

5. Dispositif selon l'une des revendications précédentes, **caractérisé en ce qu'**il comprend une tige de verrouillage (22) apte à être engagée à la fois dans plusieurs logements (23) ménagés au voisinage des crochets de retenue (17), selon une direction parallèle à la longueur de la tige.

6. Dispositif selon l'une des revendications précédentes, **caractérisé en ce qu'**il comprend un bandeau de finition (21) apte à recouvrir un interstice (E0) entre le bord supérieur (6) d'un module photovoltaïque (1) monté sur le dispositif de fixation et le bord inférieur (16) de la plaque de base (11) d'un autre dispositif de fixation (10) disposé au-dessus du dispositif de fixation.

7. Dispositif selon la revendication 6, **caractérisé en ce que** chaque première patte (184A) est pourvue, sur son côté destiné à être tourné la face (4) avant du module photovoltaïque (1), d'une encoche (184A) de réception, entre cette première patte et cette face avant, d'un bord (211) du bandeau de finition (21).

8. Dispositif selon la revendication 5 en combinaison avec l'une des revendications 6 ou 7, **caractérisé en ce que** lorsque la tige (22) est en place dans les logements (23), elle chemine sous une aile supérieure (212) du bandeau de finition (21).

9. Panneau photovoltaïque (P1, P2) comprenant un module photovoltaïque (1) et un dispositif (10) de fixation du module sur une structure porteuse, **caractérisé en ce que** le dispositif de fixation est selon l'une des revendications précédentes et **en ce que** le module forme, avec un voile principal (13) de la plaque de base (11), un angle (α) compris entre 1 ° et 3°.

10. Ensemble (E) comprenant au moins deux panneaux photovoltaïques (P1, P2) comprenant chacun un module photovoltaïque (1) et un dispositif de fixation (10) selon l'une des revendications 1 à 8, avec un premier panneau photovoltaïque (P1) disposé au dessous du deuxième panneau photovoltaïque (P2), selon la ligne de pente (A-A') d'un toit de bâtiment ou verticalement le long d'une paroi, alors que chaque première patte (184) de chaque panneau photovoltaïque est en recouvrement de la face avant de son module (1) et que chaque deuxième patte du premier panneau photovoltaïque (P1) s'étend en regard de la face avant (13A) de la plaque de base (11) du deuxième panneau photovoltaïque, au voisinage des crochets de retenue (17) du deuxième panneau photovoltaïque.

## Patentansprüche

1. Vorrichtung (10) zum Befestigen mindestens eines photovoltaischen Moduls (1) an einer Trägerstruktur, wobei diese Vorrichtung eine Grundplatte (11) umfasst, die mit Haken (17) ausgerüstet ist, die geeignet sind, einen unteren Längsrand (5) eines photovoltaischen Moduls (1) an dieser Grundplatte in Stellung zu halten, wobei diese Befestigungsvorrichtung außerdem mindestens ein Arretierelement (18) umfasst, das einen ersten Schenkel (184) aufweist, der geeignet ist, eine Vorderfläche (4) des Moduls (1) in der Nähe seines oberen Längsrandes (6) zu überdecken, **dadurch gekennzeichnet, dass** das Arretierelement außerdem aufweist:
- eine Erhebung (181) zum Beabstanden des oberen Längsrandes (6) des Moduls in Bezug auf die Grundplatte (11), und
- einen zweiten Schenkel (185), der, wenn eine andere analoge Befestigungsvorrichtung (10) in der Nähe der Befestigungsvorrichtung über dieser angeordnet ist, sich gegenüber der Vorderfläche (13A) der Grundplatte (11) der anderen Befestigungsvorrichtung erstreckt,
und dass der erste Schenkel (184), der zweite Schenkel (185) und die Abstandserhebung (181) zu einem selben einstückigen Teil (18) gehören, das das Arretierelement bildet.

2. Vorrichtung nach Anspruch 1, **dadurch gekennzeichnet, dass** das einstückige Teil (18) durch Stanzen eines Profils aus Metall, einer Legierung oder einem Kunststoffmaterial hergestellt ist.

3. Vorrichtung nach einem der vorhergehenden Ansprüche, **dadurch gekennzeichnet, dass**, wenn sie gegenüber der Vorderfläche (13A) der Grundplatte (11) einer anderen, darüber liegenden Befestigungsvorrichtung (10) liegt, der zweite Schenkel (185) sich zwischen dieser Vorderfläche und einer Rückfläche (3) eines photovoltaischen Moduls (1) erstreckt, das an dieser anderen Befestigungsvorrichtung montiert ist.

4. Vorrichtung nach einem der vorhergehenden Ansprüche, **dadurch gekennzeichnet, dass** sie mehrere Arretierelemente (18) umfasst, die über die Länge der Grundplatte (11) mit einer Teilung (p0) verteilt sind, die gleich der Abstandsteilung von Öffnungen (19) gemäß dieser Länge ist, die in dem unteren Rand (16) der Grundplatte für den Durchgang der zweiten Schenkeln (185) der Arretierelemente (18) einer anderen analogen, über der Befestigungsvorrichtung angeordneten Vorrichtung (10) eingearbeitet sind.

5. Vorrichtung nach einem der vorhergehenden Ansprüche, **dadurch gekennzeichnet, dass** sie einen Verriegelungsstift (22) umfasst, der geeignet ist, gleichzeitig in mehrere Aufnahmen (23) einzugreifen, die benachbart zu den Haltehaken (17) gemäß einer Richtung parallel zur Länge des Stiftes eingearbeitet sind.

6. Vorrichtung nach einem der vorhergehenden Ansprüche, **dadurch gekennzeichnet, dass** sie eine Abschlussblende (21) umfasst, die geeignet ist, einen Zwischenraum (E0) zwischen dem oberen Rand (6) eines photovoltaischen Moduls (1), das an der Befestigungsvorrichtung montiert ist, und dem unteren Rand (16) der Grundplatte (11) einer anderen Befestigungsvorrichtung (10), die über der Befestigungsvorrichtung angeordnet ist, abzudecken.

7. Vorrichtung nach Anspruch 6, **dadurch gekennzeichnet, dass** jeder erste Schenkel (184A) auf seiner Seite, die vorgesehen ist, zur Vorderfläche (4) des photovoltaischen Moduls (1) gerichtet zu sein, mit einer Aufnahmevertiefung (184A) zwischen diesem ersten Schenkel und dieser Vorderfläche eines Randes (211) der Abschlussblende (21) versehen ist.

8. Vorrichtung nach Anspruch 5 in Kombination mit einem der Ansprüche 6 oder 7, **dadurch gekennzeichnet, dass**, wenn der Stift (22) in Stellung in den Aufnahmen (23) ist, er unter einem oberen Flügel (212) der Abschlussblende (21) geführt ist.

9. Photovoltaische Plattenanordnung (P1, P2), ein photovoltaisches Modul (1) und eine Vorrichtung (10) zur Befestigung des Moduls an einer Trägerstruktur umfassend, **dadurch gekennzeichnet, dass** die Befestigungsvorrichtung eine solche nach den vorhergehenden Ansprüchen ist und dass das Modul mit einer Hauptfläche (13) der Grundplatte (11) einen Winkel (α) zwischen 1° und 3° bildet.

10. Anordnung (E), die mindestens zwei photovoltaische Plattenanordnungen (P1, P2) umfasst, die jeweils ein photovoltaisches Modul (1) und eine Befestigungsvorrichtung (10) nach einem der Ansprüche 1 bis 8 umfassen, wobei eine erste photovoltaische Plattenanordnung (P1) unter der zweiten photovoltaischen Plattenanordnung (P2) gemäß einer Steigungslinie (A-A') eines Dachs eines Gebäudes oder vertikal längs einer Wand angeordnet ist, wobei jeder erste Schenkel (184) jeder photovoltaischen Plattenanordnung in Überdeckung der Vorderfläche seines Moduls (1) ist und jeder zweite Schenkel der ersten photovoltaischen Plattenanordnung (P1) sich gegenüber der Vorderfläche (13A) der Grundplatte (11) der zweiten photovoltaischen Plattenanordnung benachbart zu den Haltehaken (17) der zweiten photovoltaischen Plattenanordnung erstreckt.

## Claims

1. Device (10) for fastening at least one photovoltaic module (1) onto a supporting structure, wherein this device comprises a base plate (11) fitted with hooks (17) for holding in position a lower longitudinal edge (5) of a photovoltaic module (1) placed on this base plate, this fastening device additionally comprising at least one locking member (18), which comprises a first lug (184) capable of overlapping a front face (4) of the module (1) in the vicinity of its upper longitudinal edge (6), **characterised in that** the locking member additionally comprises
• a contour (181) for spacing the upper longitudinal edge (6) of the module in relation to the base plate (11), and
• a second lug (185) which, when another similar fastening device (10) is arranged in the vicinity of the fastening device and above this, extends facing the front face (13a) of the base plate (11) of the other fastening device,
and **in that** the first lug (184), the second lug (185) and the spacer contour (181) belong to the same part (18) made in a single piece that forms the locking member.

2. Device according to claim 1, **characterised in that** the single-piece part (18) is formed by cutting a section made of metal, alloy or synthetic material.

3. Device according to one of the preceding claims, **characterised in that** when it faces the front face (13A) of the base plate (11) of another fastening device (10) arranged above it, the second lug (185) extends between this front face and a rear face (3) of a photovoltaic module (1) mounted on this other fastening device.

4. Device according to one of the preceding claims, **characterised in that** it comprises multiple locking members (18) distributed over the length of the base plate (11) with a pitch (p0) equal to the spacing pitch, along this length, of orifices (19) arranged in the lower edge (16) of the base plate for the passage of the second lugs (185) of the locking members (18) of another similar device (10) arranged below the fastening device.

5. Device according to one of the preceding claims, **characterised in that** it comprises a locking bar (22) capable of engaging simultaneously in several recesses (23) arranged in the vicinity of the holding hooks (17) in a direction parallel to the length of the bar.

6. Device according to one of the preceding claims, **characterised in that** it comprises an end strip (21) capable of covering an interstice (EO) between the upper edge (6) of a photovoltaic module (1) mounted on the fastening device and the lower edge (16) of the base plate (11) of another fastening device (10) arranged above the fastening device.

7. Device according to claim 6, **characterised in that** on its side intended to face the front face (4) of the photovoltaic module (1) each first lug (184A) is provided, between this first lug and this front face, with a receiving slot (184A) for an edge (211) of the end strip (21).

8. Device according to claim 5 in combination with one of claims 6 or 7, **characterised in that** when the bar (22) is in place in the recesses (23), it passes below an upper wing (212) of the end strip (21).

9. Photovoltaic panel (P1, P2) comprising a photovoltaic module (1) and a device (10) for fastening the module onto a supporting structure, **characterised in that** the fastening device is in accordance with one of the preceding claims and **in that** the module forms an angle (α) ranging between 1° and 3° with a main shell (13) of the base plate (11).

10. Assembly (E) comprising at least two photovoltaic panels (P1, P2), each comprising a photovoltaic module (1) and a fastening device (10) according to one of claims 1 to 8, with a first photovoltaic panel (P1) arranged below the second photovoltaic panel (P2) following the pitch line (A-A') of a roof of a building or vertically along a wall, while each first lug (184) of each photovoltaic panel overlaps the front face of its module (1) and each second lug of the first photovoltaic panel (P1) extends facing the front face (13A) of the base plate (11) of the second photovoltaic panel in the vicinity of the holding hooks (17) of the second photovoltaic panel.
